# EUROPÄISCHE PATENTSCHRIFT

(11) **EP 4 031 320 B1**
(45) Veröffentlichungstag und Bekanntmachung des Hinweises auf die Patenterteilung: **08.11.2023**
(21) Anmeldenummer: 20776107.3
(22) Anmeldetag: 18.09.2020
(51) Int. Cl.: B23K 26/359, B23K 26/53, B23K 26/082, B23K 26/364, B23K 26/0622, B23K 26/06, B23K 26/16, B23K 103/16, B23K 101/42

(54) **VERFAHREN ZUM BEARBEITEN EINES METALL-KERAMIK-SUBSTRATS UND METALL-KERAMIK-SUBSTRATE HERGESTELLT MIT EINEM SOLCHEN VERFAHREN**
METHOD FOR MACHINING A METAL-CERAMIC SUBSTRATE AND METAL-CERAMIC SUBSTRATE PRODUCED USING SUCH A METHOD
PROCÉDÉ D'USINAGE D'UN SUBSTRAT MÉTAL-CÉRAMIQUE ET SUBSTRAT MÉTAL-CÉRAMIQUE FABRIQUÉ PAR UN TEL PROCÉDÉ

(30) Priorität: 18.09.2019 DE 102019125124
(43) Veröffentlichungstag der Anmeldung: 27.07.2022
(73) Patentinhaber: Rogers Germany GmbH, 92676 Eschenbach (DE)
(72) Erfinder: KOHL, Thomas, 91275 Auerbach (DE); RETTINGER, Bernhard, 92670 Windischeschenbach (DE); WAGLE, Fabian, 95447 Bayreuth (DE)
(74) Vertreter: Müller Schupfner & Partner Patent- und Rechtsanwaltspartnerschaft mbB
(86) Internationale Anmeldenummer: PCT/EP2020/076113
(87) Internationale Veröffentlichungsnummer: WO 2021/053148

(56) Entgegenhaltungen:
- EP-A1- 3 417 982
- EP-A1- 3 418 266
- US-A1- 2007 062 919
- US-A1- 2010 129 984

## Beschreibung

Die vorliegende Erfindung betrifft ein Verfahren zum Bearbeiten von Metall-Keramik-Substraten und Metall-Keramik-Substrate hergestellt mit einem solchen Verfahren.

Elektronikmodule sind aus dem Stand der Technik, beispielsweise als Leistungselektronikmodule, hinlänglich bekannt. Solche Elektronikmodule nutzen typischerweise schaltbare bzw. steuerbare Elektronikbauteile, die auf einem gemeinsamen Metall-Keramik-Substrat über Leiterbahnen miteinander verschaltet sind. Wesentliche Bestandteile des Metall-Keramik-Substrats sind dabei eine Isolationsschicht, die im Falle des Metall-Keramik-Substrats aus einem eine Keramik umfassenden Material gefertigt ist, und eine Metallisierungsschicht, die zur Bildung von Leiterbahnen vorzugsweise strukturiert und an einer Bauteilseite des Metall-Keramik-Substrats ausgebildet ist.

Typischerweise wird dabei ein Metall-Keramik-Substrat als Großkarte realisiert, die nach oder vor dem Strukturieren in kleinere Metall-Keramik-Substrate vereinzelt wird. Solche Großkarten werden dazu mittels Laserlichts zur Herstellung von Sollbruchlinien und/oder Trennstellen bearbeitet. Anschließend lassen sich die jeweiligen Metall-Keramik-Substrate aus der Großkarte, z. B. durch Herausbrechen, vereinzelt bereitstellen. Hierbei hat sich die Verwendung von Ultrakurzpulslasern als vorteilhaft erwiesen, wie es beispielsweise in der WO 2017 / 108 950 A1 beschrieben ist.

Aus der EP 3 418 266 A1, welche beispielhaft die Merkmale des Oberbegriffs der unabhängigen Ansprüche offenbart, ist ein Verfahren zur Herstellung einer Sollbruchlinie bekannt, bei der eine Kerbe realisiert wird, die gegenüber der Lotrichtung geneigt ist. Die EP 3 417 982 A1 betrifft ein Verfahren zum Bearbeiten eines Metall-Keramik-Substrats, bei dem das Laserlicht zur Erzeugung von Sollbruchlinien über das Metall-Keramik-Substrat bewegt wird.

Aus der US 2007 062919 A1 ist die Nutzung eines schwenkbaren Spiegelelements und aus der US 2010 129 984 A1 die Nutzung einer F-Theta Linse bekannt. Ausgehend von diesem Stand der Technik macht es sich die vorliegende Erfindung zur Aufgabe, das Herstellen von Sollbruchlinien und bevorzugt von Trennlinien in einem Metall-Keramik-Substrat, wobei diese als Großkarte vorliegen, zu verbessern.

Diese Aufgabe wird gelöst durch ein Verfahren zur Bearbeitung eines Metall-Keramik-Substrats gemäß Anspruch 1, und durch ein Metall-Keramik-Substrat hergestellt mit einem solchen Verfahren gemäß Anspruch 8. Weitere Ausführungsbeispiele sind den Unteransprüchen und der Beschreibung zu entnehmen.

Im Gegensatz zum Stand der Technik ist es erfindungsgemäß vorgesehen, dass das Metall-Keramik-Substrat während der Bearbeitung zwecks der Herstellung von Sollbruchlinien und bevorzugt von Trennlinien zum Vereinzeln der Metall-Keramik-Substrate bevorzugt ortsfest angeordnet ist. "Ortsfest" bedeutet entweder fixiert an einem Ort befestigt oder dreh-/schwenkbar an einem Ort befestigt. Hierzu wird beispielsweise das Metall-Keramik-Substrat, das als Großkarte bereitgestellt wird, in einem Träger fixiert. Ein solcher Träger umfasst beispielsweise eine Saugvorrichtung, die während des Verfahrens durch einen entsprechenden Unterdruck an der Unterseite des Metall-Keramik-Substrats das Metall-Keramik-Substrat im Träger fixiert. Durch das Fixieren bzw. das ortsfeste Anordnen des Metall-Keramik-Substrats während der Herstellung der Sollbruchlinien bzw. der Trennlinien lassen sich in vorteilhafter Weise feiner strukturierte und präziser geformte Sollbruchlinien erzeugen, insbesondere, wenn eine mehrfache Überfahrt des Laserstrahls über das Metall-Keramik-Substrat vorgesehen ist. Dabei ist es vorzugsweise vorgesehen, dass ein Laserstrahl des UKP-Systems entlang der geplanten Verläufe der Sollbruchlinien bzw. Trennlinien gefahren wird, vorzugsweise in mehreren Überfahrten. Dabei weist der über das Metall-Keramik-Substrat verfahrene Laserstrahl eine Bearbeitungsgeschwindigkeit zwischen 0,1 und 2 m pro Sekunde, bevorzugt zwischen 0,8 und 1,5 m pro Sekunde auf.

Ferner umfasst das Metall-Keramik-Substrat mindestens eine Metallschicht, die an einer Oberseite einer Keramikschicht stoffschlüssig angebunden ist, wobei sich die Metallschicht und die Keramikschicht entlang einer Haupterstreckungsebene erstrecken und entlang einer senkrecht zur Haupterstreckungsebene verlaufenden Stapelrichtung übereinander angeordnet sind. Als Materialien für die mindestens eine Metallschicht sind Kupfer, Aluminium, Molybdän und/oder deren Legierungen, sowie Laminate wie CuW, CuMo, CuAl, AlCu und/oder CuCu vorstellbar, insbesondere eine Kupfer-Sandwichstruktur mit einer ersten Kupferschicht und einer zweiten Kupferschicht, wobei sich eine Korngröße in der ersten Kupferschicht von einer zweiten Kupferschicht unterscheidet. Weiterhin ist bevorzugt vorgesehen, dass die mindestens eine Metallschicht oberflächenmodifiziert ist. Als Oberflächenmodifikation ist beispielsweise eine Versiegelung mit einem Edelmetall, insbesondere Silber und/oder Gold, oder ENIG ("*electroless nickel immersion gold*") oder ein Kantenverguss an der ersten bzw. zweiten Metallisierungsschicht zur Unterdrückung einer Rissbildung bzw. -weitung denkbar.

Vorzugsweise weist mindestens eine die Keramikschicht Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrO₂ = HPS9 oder Al₂O₃ mit 25% ZrO₂ = HPS25), SiC, BeO, MgO, hochdichtes MgO (> 90% der theoretischen Dichte), TSZ (tetragonal stabilisiertes Zirkonoxid) oder ZTA als Material für die Keramik auf. Es ist dabei auch vorstellbar, dass die Isolationsschicht als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einer Isolationsschicht zusammengefügt sind. Vorzugsweise wird eine möglichst wärmeleitfähige Keramik für einen möglichst geringen Wärmwiderstand verwendet.

Dabei wird vorzugsweise die Metallschicht an die Isolierschicht mittels eines AMB-Verfahrens und/oder ein DCB-Verfahren stoffschlüssig angebunden.

Unter einem "DCB-Verfahren" (Direct-Copper-Bond-Technology) oder einem "DAB-Verfahren" (Direct-Aluminium-Bond-Technology) versteht der Fachmann ein solches Verfahren, das beispielsweise zum Verbinden von Metallschichten oder - blechen (z. B. Kupferblechen oder -folien oder Aluminiumblechen oder -folien) miteinander und/oder mit Keramik oder Keramikschichten dient, und zwar unter Verwendung von Metall- bzw. Kupferblechen oder Metall- bzw. Kupferfolien, die an ihren Oberflächenseiten eine Schicht oder einen Überzug (Aufschmelzschicht), aufweisen. Bei diesem beispielsweise in der US 3 744 120 A oder in der DE23 19 854 C2 beschriebenen Verfahren bildet diese Schicht oder dieser Überzug (Aufschmelzschicht) ein Eutektikum mit einer Schmelztemperatur unter der Schmelztemperatur des Metalls (z. B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im Wesentlichen nur im Bereich der Aufschmelzschicht bzw. Oxidschicht.

Insbesondere weist das DCB-Verfahren dann z. B. folgende Verfahrensschritte auf:
- Oxidieren einer Kupferfolie derart, dass sich eine gleichmäßige Kupferoxidschicht ergibt;
- Auflegen des Kupferfolie auf die Keramikschicht;
- Erhitzen des Verbundes auf eine Prozesstemperatur zwischen etwa 1025 bis 1083°C, z. B. auf ca. 1071 °C;
- Abkühlen auf Raumtemperatur.

Unter einem Aktivlot-Verfahren z. B. zum Verbinden von Metallschichten oder Metallfolien, insbesondere auch von Kupferschichten oder Kupferfolien mit Keramikmaterial ist ein Verfahren zu verstehen, welches speziell auch zum Herstellen von Metall-Keramik-Substraten verwendet wird, wird bei einer Temperatur zwischen ca.650-1000°C eine Verbindung zwischen einer Metallfolie, beispielsweise Kupferfolie, und einem Keramiksubstrat, beispielsweise Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist. Alternativ ist zur Anbindung auch ein Dickschichtverfahren vorstellbar.

Gemäß einer bevorzugten Ausführungsform ist es vorgesehen, dass das Laserlicht über mindestens ein schwenkbares Spiegelelement auf das Metall-KeramikSubstrat gelenkt wird und insbesondere mittels des mindestens einen schwenkbaren Spiegelelement über das Metall-Keramik-Substrat bewegt wird. Mittels einer entsprechenden Scanvorrichtung ist es beispielsweise möglich, den Laserstrahl bzw. das Laserlicht möglichst positionsgenau über den geplanten Verlauf der zukünftigen Sollbruchlinie bzw. Trennlinie, d. h. den Berbeitungsbereich, zu verfahren. Dabei ist es insbesondere vorgesehen, dass das mindestens eine Spiegelelement an die verwendete Pulsdauer und oder Wellenlänge des Laserlichts angepasst ist, um Verluste bei der Reflektion am mindestens einen Spiegelelement zu reduzieren. Weiterhin ist es vorstellbar, dass es sich bei dem mindestens einen Spiegelelement um einen Hohlspiegel und/oder einen dielektrischen Spiegel handelt, um den Laserstrahl zumindest teilweise bereits zu fokussieren, vorzugsweise nach und/oder vor Durchtritt durch eine zusätzliche Linse. Durch das Fokussieren, insbesondere mittels einer Linse, lässt sich in vorteilhafter Weise die Intensität der auftreffenden Laserpulse erhöhen. Weiterhin ist es besonders bevorzugt vorzugsehen, dass das mindestens eine Spiegelelement um mindestens zwei Achsen verschwenkbar ist. Dadurch lässt sich sicherstellen, dass mittels der jeweiligen Ausrichtung des Spiegelelements jeder Punkt an der Oberseite des Metall-Keramik-Substrats vom Lichtstrahl erfasst werden kann. Vorzugsweise handelt es sich um genau ein Spiegelelement.

Vorzugsweise handelt es sich bei dem UKP-Laser um eine Laserquelle, die Lichtpulse mit einer Pulsdauer von 0,1 bis 800 ps, bevorzugt 1 bis 500 ps, besonders bevorzugt von 10 bis 50 ps bereitstellt. Es hat sich als besonders vorteilhaft herausgestellt, mittels derartiger Pulse, insbesondere mit den oben genannten Bearbeitungsgeschwindigkeiten, Sollbruchlinien bzw. Sollbruchstellen herzustellen, die ein besonders günstiges Verhältnis zwischen aufgeschmelzter Keramik und Rissbildung innerhalb der Sollbruchlinien aufweisen, wodurch ein besonders zuverlässiges bzw. erfolgreiches Brechen entlang der Sollbruchlinien gewährleistet werden kann, ohne dass Schäden beim Brechen am vereinzelten Metall-Keramik-Substrat entstehen.

Vorzugsweise ist es vorgesehen, dass zwischen dem Spiegelelement und dem Metall-Keramik-Substrat und/oder der Laserquelle und dem Spiegelelement eine Linse angeordnet ist, wobei eine Brennweite der Linse einen Wert von mehr als 300 mm oder 350 mm, bevorzugt mehr als 400 mm und besonders bevorzugt zwischen 420 mm und 480 mm aufweist. Mittels der Linse lässt sich der Laserstrahl auf die Oberseite des Metall-Keramik-Substrats fokussieren, um dort zu einem Materialabtrag zu führen. Dabei hat es sich insbesondere als besonders vorteilhaft herausgestellt, die Linse in einem Abstand zum Metall-Keramik-Substrat anzuordnen, der im Wesentlichen der Brennweite der Linse entspricht. Der Begriff "im Wesentlichen" meint hier insbesondere ein Abweichung von +/- 10 mm, bevorzugt +/-5 und besonders bevorzugt +/- 3 mm. Mit derart großen Brennweiten ist es in vorteilhafter Weise möglich, durch die entsprechende Tiefenschärfe für den Laserstrahl ein möglichst senkrechtes Auftreffen auf die Metall-Keramik-Substratoberfläche zu gewährleisten, insbesondere in den Rundbereichen. Da insbesondere eine einzige Linse für die Bearbeitung eines Metall-Keramik-Substrats, insbesondere in Form einer Großkarte, vorgesehen ist, ist eine Linse mit einer entsprechend großen seitlichen Ausdehnung in Querrichtung zur Strahlrichtung, entlang der die Laserstrahlen die Linse durchqueren, erforderlich. Infolgedessen ist es gerade für solche Sollbruchlinien, die im Randbereich des Metall-Keramik-Substrats hergestellt werden, in der Regel nicht möglich, ein senkrechtes Auftreffen der Lichtstrahlen auf das Metall-Keramik-Substrat sicherzustellen, wenn die Brennweite zu klein gewählt wird. Durch die Verwendung der entsprechend großen Brennweite, die bevorzugt größer als 300 mm ist, ist es allerdings möglich, ein Auftreffen zu gewährleisten, das möglichst wenig von einem senkrechten Auftreffen der Lichtstrahlen auf die typisch großen Metall-Keramik-Substratoberflächen abweicht.

Insbesondere ist es dabei vorgesehen, dass mittels der Laserstrahlen v-förmige Kerben als Sollbruchlinie an der Oberseite des Metall-Keramik-Substrats ausgebildet werden. Dabei bildet sich im Wesentlichen eine Symmetrieachse in diesen kerbenförmigen Sollbruchlinien aus, die durch den tiefsten Punkt der Sollbruchlinie verläuft. Diese Symmetrieachse, bezogen auf die die Kerbe im Wesentlichen spiegelsymmetrisch ist, legt im Wesentlichen einen Neigungswinkel der Sollbruchlinie gegenüber einer Lotrichtung des Metall-Keramik-Substrats bzw. der Stapelrichtung fest. Insbesondere hat es sich gezeigt, dass es möglich ist, Neigungswinkel der erzeugten Sollbruchlinie bzw. Kerben, der insbesondere v-förmigen Kerben, zu realisieren, die erfindungsgemäß gegenüber der Lotrichtung des Metall-Keramik-Substrats, d. h. einer senkrecht zur Haupterstreckungsebene verlaufenden Richtung, um weniger als 12°, insbesondere um weniger als 10° geneigt sind.

Es ist vorgesehen, dass alle Neigungswinkel in einer Großkarte kleiner sind als 12°, bevorzugt kleiner als 10° und besonders bevorzugt kleiner als 8°. Erfindungsgemäß nimmt ein über alle Sollbruchvertiefungen einer Großkarte gemittelter Neigungswinkel einen Wert zwischen 2° und 11°, bevorzugt zwischen 5° und 9° und besonders bevorzugt zwischen 6° und 8° an.

Vorzugsweise ist es vorgesehen, dass während der Behandlung entstehende Teilchen mittels einer Absaugvorrichtung abgesaugt werden. Derartige Absaugvorrichtungen veranlassen einen Saugstrom, der insbesondere derart konfiguriert ist, dass die während der Bearbeitung entstehenden, insbesondere durch Sublimation entstehenden, Keramikteilchen von der Oberseite des Metall-Keramik-Substrats abgesaugt werden. Vorzugsweise ist dabei die Absaugvorrichtung im Wesentlichen auf Höhe des Metall-Keramik-Substrats angeordnet und veranlasst einen Saugstrom, der im Wesentlichen parallel zur Haupterstreckungsebene des Substrats verläuft, insbesondere in der Nähe der Substratoberfläche. Dadurch werden die durch Sublimation entstandenen Keramikteilchen während der Behandlung mit den Laserpulsen zur Seite hin abgesaugt.

Besonders bevorzugt ist es vorgesehen, dass mehrere Absaugvorrichtungen vorgesehen sind, mit denen jeweils in unterschiedlichen Richtungen parallel zur Haupterstreckungsebene Teilchen von der Oberfläche des Metall-Keramik-Substrats abgesaugt werden können. Dadurch ist es in vorteilhafter Weise möglich, zu verhindern, dass während der Bearbeitung entstehende Plasmaflammen abhängig von ihrer Position auf dem Metall-Keramik-Substrat unterschiedlich geneigt sind. Dies verhindert wiederum, dass die jeweiligen Laserstrahlen unterschiedlich große Anteile der Plasmaflammen zu durchschreiten haben, bevor sie auf das Metall-Keramik-Substrat treffen, was sich wiederum positiv auswirkt auf die auf das Metall-Keramik-Substrat auftreffenden Laserstrahlen bzw. das auftreffende Laserlicht. Insbesondere lassen sich dadurch möglichst gleichförmig ausgebildete Sollbruchlinien erstellen, die sich insbesondere in Hinblick auf ihr Brechverhalten nicht über das gesamte Metall-Keramik-Substrat voneinander unterscheiden. Vorzugsweise ist jeweils an gegenüberliegenden Seiten des Trägers bzw. des Metall-Keramik-Substrats jeweils mindestens eine Absaugvorrichtung und/oder eine Blasvorrichtung angeordnet.

Vorzugsweise wird die Absaugvorrichtung von einem Gasstrom unterstützt. Mittels einer derartigen Maßnahme ist es in vorteilhafter Weise möglich, gezielt die Auswirkungen der entstandenen Plasmaflammen zu steuern. Beispielsweise folgt der unterstützende Gasstrom im Wesentlichen der Richtung, entlang der die Laserstrahlen auf das Metall-Keramik-Substrat treffen. Beispielsweise ist der Gasstrom derart konfiguriert, dass er zunächst von der Linse kommend auf das Metall-Keramik-Substrat gerichtet und dann im Wesentlichen parallel zur Haupterstreckungsebene abgeleitet wird, sodass das im Wesentlichen in der Mitte des Metall-Keramik-Substrats auftreffende Gas die Plasmaflammen nach außen richtet bzw. verkippt. Entsprechend werden die Plasmaflammen jeweils in dieselbe Richtung weg vom auftreffenden Laserstrahl weggeneigt, sodass im Wesentlichen gleichbleibende Bedingungen für das Auftreffen der Laserstrahlen auf das Metall-Keramik-Substrat eingestellt werden können. Dies wirkt sich ebenfalls positiv auf die Homogenität der Sollbruchlinien, insbesondere bezüglich der Brucheigenschaften, bezogen auf das gesamte Metall-Keramik-Substrat, d.h. auf die gesamte Großkarte, aus.

Vorzugsweise ist es vorgesehen, dass mittels eines elektrischen und/oder magnetischen Felds während der Bearbeitung entstehende Teilchen aus einem Bearbeitungsbereich wegbewegt werden. Dadurch ist es in vorteilhafter Weise möglich, die Bildung einer Plasmaflamme bereits zu unterdrücken und/oder zu minimieren. Hierzu werden beispielsweise Magnete oder Kondensatoren derart neben dem Träger bzw. neben das Metall-Keramik-Substrat platziert, dass sich Feldlinien einstellen, die vorzugsweise parallel zur Haupterstreckungsebene des Metall-Keramik-Substrats verlaufen. Infolgedessen werden die ionisierten Teilchen der Plasmaflamme entlang der Feldlinien wegbewegt, sodass sie nicht mehr Teil der Plasmaflamme bilden. Infolgedessen wird die Plasmaflamme reduziert oder gänzlich unterdrückt.

Vorzugsweise ist es vorgesehen, dass das elektrische Feld und/oder das elektrische Feld rotieren. Mit anderen Worten: das magnetische bzw. elektrische Feld ist nicht statisch, sondern dynamisch, so dass sich die Richtung, in die die Plasmaflamme ausgerichtet wird, sich stetig ändert. Vorzugsweise bildet sich hierbei eine pilzartige Gestalt der Plasmaflamme während der Nutzung des Magnetfeldes und/oder elektrischen Feldes aus.

Vorzugsweise wird das Metall-Keramik-Substrat während der Herstellung der Sollbruchlinie und/oder der Trennlinie geschwenkt, gedreht und/oder geneigt, insbesondere in Abhängigkeit des aktuellen Bearbeitungsbereichs auf dem Metall-Keramik-Substrat. Auf diese Weise lassen sich leichte Schrägstellungen des auf dem Metall-Keramik-Substrat auftreffenden Lichtstrahls kompensieren. Mit anderen Worten: Es wird der Träger bzw. das Metall-Keramik-Substrat derart geneigt, dass ein möglichst senkrechtes Auftreffen der Lichtstrahlen auf das Metall-Keramik-Substrat sichergestellt wird. Dadurch lässt sich sicherstellen, dass die Sollbruchlinien bzw. Trennlinien in den Randbereichen und in der Mitte des Metall-Keramik-Substrats möglichst gleich ausgestaltet und geformt sind. Vorzugsweise wird die Linse verkippt, um ein senkrechtes Auftreffen zu gewährleisten. Träger und/oder Linse werden dabei automatisch verkippt.

Vorzugsweise ist es vorgesehen, dass das Spiegelelement Teil eines Spiegelarrays bzw. einer mehrteiligen Spiegelanordnung ist. Ein solches Spiegelarray umfasst vorzugsweise mehrere schwenkbare Spiegelelemente, die jeweils unabhängig voneinander verschwenkbar und ausrichtbar sind. Infolgedessen ist es beispielsweise möglich, mehrere Laserstrahlen auf dieses Spiegelarray zur richten, um mittels der jeweils unabhängig voneinander ansteuerbaren Spiegelelementen mehrere Teilbereiche der Oberseite des Metall-Keramik-Substrats zeitgleich zu bearbeiten. Dies beschleunigt den Herstellungsprozess der Sollbruchlinien bzw. Trennlinien.

Ein weiterer Aspekt der vorliegenden Erfindung ist ein Metall-Keramik-Substrat, hergestellt mit dem erfindungsgemäßen Verfahren. Alle für das Verfahren beschriebenen Merkmale und Vorteile lassen sich analog anwenden auf das Metall-Keramik-Substrat, hergestellt mit dem erfindungsgemäßen Verfahrens, und andersrum.

Besonders bevorzugt ist es vorgesehen, wenn die Linse der Anlage zum Durchführen des Verfahrens eine F-Theta Linse ist, insbesondere eine F-Theta Linse, die mindestens so groß ist, wie das zu bearbeitende Metall-Keramik-Substrat. Mittels einer F-Theta Linse ist es in vorteilhafter Weise möglich, im Wesentlichen ein senkrechtes Auftreffen der Lichtstrahlen, auch in den Randbereichen des Metall-Keramik-Substrats, zu realisieren, vorzugsweise ohne die Brennweite signifikant zu erhöhen.

Vorstellbar ist auch die Verwendung einer telezentrischen Linse. Damit sind auch nahezu senkrechte Ausrichtungen des Laserlichts gegenüber der Haupterstreckungsebene möglich, wenn das Laserlicht die Linse nicht mittig durchtritt.

Der Neigungswinkel der erzeugten Sollbruchlinie, der insbesondere v-förmigen Kerbe , zu einer senkrecht zur Haupterstreckungsebene verlaufenden Richtung, nimmt einen Wert an, der kleiner ist als 12° und bevorzugt kleiner als 10°, vorzugsweise für alle Sollbruchlinien einer Großkarte.

Die Sollbruchlinie wird, vor dem Vereinzeln, durch Seitenflächen begrenzt und an einander gegenüberliegenden Seiten des vereinzelten Metall-Keramik-Substrats weisen vorzugsweise die verschiedenen Sollbruchlinien zugeordneten Seitenflächen unterschiedliche Seitenflächenneigungen auf. Die Seitenflächenneigungen werden dabei relativ zu einer senkrecht zur Haupterstreckungsebene verlaufenden Richtung bestimmt. Die Seitenflächen sind insbesondere die Abschnitte des Keramikelements oberhalb einer Bruchkante, die beim Vereinzeln entsteht. Demgegenüber wird die Ausrichtung der Seitenflächen bereits durch die Geometrie vor dem Zerbrechen festgelegt.

Insbesondere nimmt eine Differenz der Seitenflächenneigungen von gegenüberliegenden Seitenflächen einen von Null verschiedenen Wert an, vorzugsweise einen Wert zwischen 1° und 10°, bevorzugt zwischen 2° und 8° und besonders bevorzugt zwischen 3° und 6°. Dabei wird insbesondere ein über mehrere vereinzelte Metall-Keramik-Substrate gemittelte Differenz bestimmt. Vorzugsweise wird über 15, bevorzugt über 35 und besonders bevorzugt über 50 vereinzelte Metall-Keramik-Substrate gemittelt.

Dabei ist es vorgesehen, dass ein Mittelwert der Differenzen einen Wert unterhalb von 4°, bevorzugt unterhalb von 3° und besonders bevorzugt unterhalb von 2° annimmt. Hierbei wird berücksichtigt, dass sich über die gesamte Großkarte, die Seitenflächenneigungen verteilen und die Differenz für zahlreiche vereinzelte Metall-Keramik-Substrate kleiner ist als 6°. Dies macht sich beim Mitteln über viele Metall-Keramik-Substrate durch den vergleichsweise niedrigen Mittelwert bemerkbar. Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: schematische Darstellung eines Verfahrens zum Bearbeiten eines Metall-Keramik-Substrats gemäß einer ersten beispielhaften Ausführungsform der vorliegenden Erfindung,
- **Fig. 2:**: schematische Darstellung eines Verfahrens zum Bearbeiten eines Metall-Keramik-Substrats gemäß einer zweiten beispielhaften Ausführungsform der vorliegenden Erfindung,
- **Fig. 3**: schematische Darstellung eines Verfahrens zum Bearbeiten eines Metall-Keramik-Substrats gemäß einer dritten beispielhaften Ausführungsform der vorliegenden Erfindung,
- **Fig. 4**: schematische Darstellung eines Verfahrens zum Bearbeiten eines Metall-Keramik-Substrats gemäß einer vierten beispielhaften Ausführungsform der vorliegenden Erfindung und
- **Fig. 5**: schematische Darstellung zweier vereinzelter Metall-Keramik-Substrate hergestellt mit einem Verfahren der vorliegende Erfindung..

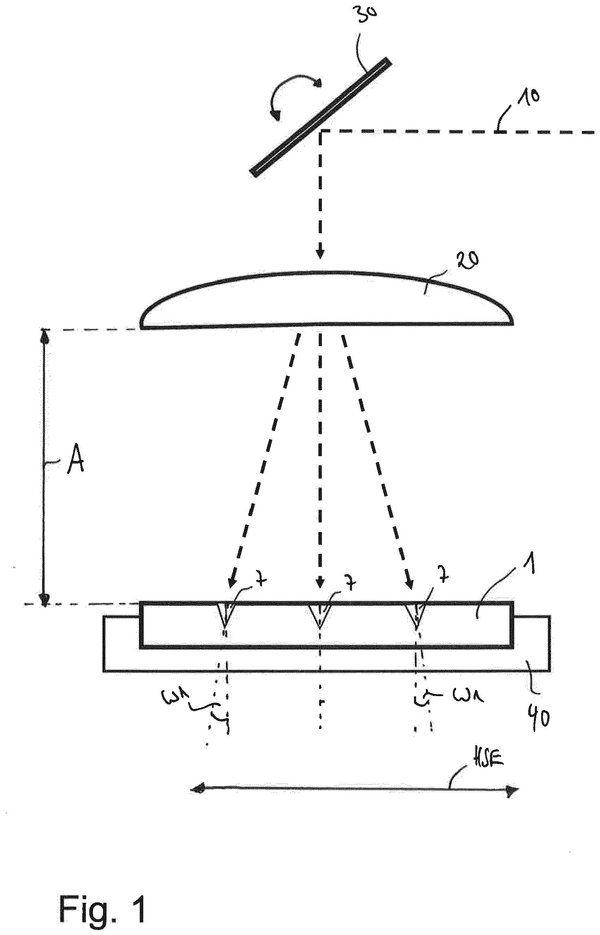

In **Figur 1** ist schematisch ein Verfahren zum Bearbeiten eines Metall-Keramik-Substrats 1 gemäß einer ersten bevorzugten Ausführungsform der vorliegenden Erfindung dargestellt. Solch ein Metall-Keramik-Substrat 1 dient vorzugsweise jeweils als Trägerelement von elektronischen bzw. elektrischen Bauteile, die an das Metall-Keramik-Substrat 1 anbindbar sind. Wesentliche Bestandteile eines solchen Metall-Keramik-Substrats 1 sind eine sich entlang einer Haupterstreckungsebene HSE erstreckende Keramikschicht und eine an der Keramikschicht angebundene Metallschicht. Die Keramikschicht ist aus mindestens einem eine Keramik umfassenden Material gefertigt. Die Metallschicht und die Keramikschicht sind dabei entlang einer senkrecht zur Haupterstreckungsebene HSE verlaufenden Stapelrichtung übereinander angeordnet und in einem gefertigten Zustand über eine Anbindungsfläche zumindest bereichsweise miteinander stoffschlüssig verbunden. Vorzugsweise wird die Metallschicht dann zur Bildung von Leiterbahnen oder Anbindungsstellen für die elektrischen Bauteile strukturiert. Beispielsweise wird diese Strukturierung in die Metallschicht eingeätzt. Im Vorfeld muss allerdings eine dauerhafte Bindung, insbesondere stoffschlüssige Anbindung, zwischen der Metallschicht und der Keramikschicht gebildet werden.

Um die Metallschicht dauerhaft an die Keramikschicht anzubinden, umfasst eine Anlage zur Herstellung des Metall-Keramik-Substrats, insbesondere in einem DCB oder DAB - Anbindungsverfahren, einen Ofen, in dem ein gestapelte Anordnung aus einer Keramikschicht und mindestens einer Metallschicht erhitzt wird und so die Bindung erzielt wird. Beispielsweise handelt es sich bei der Metallschicht um eine aus Kupfer gefertigte Metallschicht, wobei die Metallschicht und die Keramikschicht mit einem DCB (Direct-Copper-Bonding) - Anbindungsverfahren miteinander verbunden werden. Alternativ lässt sich die Metallschicht über ein Aktivlötverfahren bzw. ein Dickschichtfilmverfahren an die Keramikschicht anbinden.

Nach dem Anbinden, insbesondere mittels eines DCB Verfahrens, eines Aktlötverfahrens und/oder einem Dickschichtfilmverfahren, wird das Metall-Keramik-Substrat 1 erfindungsgemäß als Großkarte bereitgestellt. Derartige Großkarten sind im Folgeprozess zu vereinzeln, um jeweils vereinzelte Metall-Keramik-Substrate 1 bereitzustellen. Erfindungsgemäß ist es vorgesehen, für ein solches Vereinzeln, die Großkarte mittels Ultrakurzpulslaserlicht, zu bearbeiten. Dabei ist es möglich, sofort eine Trennung mittels des Laserlichts 10 zu realisieren und/oder eine Sollbruchlinie 7 zu bilden, entlang der im Folgeprozess die Großkarte unter Ausbildung der vereinzelten Metall-Keramik-Substrate 1 zerbrochen wird. Unter einem Ultrakurzpulslaser versteht der Fachmann insbesondere solche Laserquellen, die Laserpulse emittieren, deren Pulslänge kleiner als eine Nanosekunde sind. Vorzugsweise beträgt die Pulsdauer zwischen 0,1 und 100 ps. Ferner ist es vorstellbar, dass die Pulsdauer im Femtosekundenbereich liegt, d.h. die Pulslänge 0,1 bis 100 fs beträgt. In dem in Figur 1 dargestellten Ausführungsbeispiel ist das Metall-Keramik-Substrat 1 in einem Träger 40 angeordnet.

Dabei ist es insbesondere vorgesehen, dass das Metall-Keramik-Substrat 1 mittels des Trägers 40 ortsfest angeordnet ist. Um eine Sollbruchlinie 7 und/oder eine Schnittlinie im Metall-Keramik-Substrat 1 zu erzeugen, die insbesondere einen bestimmten Verlauf über das Metall-Keramik-Substrat 1 aufweist, ist es vorgesehen, dass Laserlicht 10 bzw. ein Laserstrahl über das Metall-Keramik-Substrat 1 verfahren wird. Mit anderen Worten: Statt das Metall-Keramik-Substrat 1 relativ zum Laserlicht 10 bzw. dessen Ausrichtung zu bewegen, ist es vorgesehen, die Ausrichtung des Laserlichts 10 bzw. Laserstrahls derart vorzunehmen, dass das über das Metall-Keramik-Substrat 1 hinweggefahrene Laserlicht 10 an den jeweiligen Auftreffpunkten eine Sollbruchlinie 7 und/oder eine Trenn- bzw. Schnittlinie erzeugt. Dabei ist es vorstellbar, dass die Sollbruchlinie 7 durchgezogen ist und/oder unterbrochen, d. h. die Sollbruchlinie 7 liegt als Perforation vor.

Zur Ausrichtung des Laserlichts 10 ist es insbesondere vorgesehen, dass das Laserlicht 1 auf ein Spiegelelement 30 gerichtet wird. An dem Spiegelelement 30 wird der Laserstrahl 10 reflektiert und trifft anschließend auf das Metall-Keramik-Substrat 1. Dabei ist es insbesondere vorgesehen, dass das Spiegelelement 30 schwenkbar gelagert ist, insbesondere um mindestens zwei Achsen schwenkbar gelagert ist, um den Laserlicht 10 auf einen bestimmten Behandlungsbereich bzw. bestimmte Bereiche auf dem Metall-Keramik-Substrat 1 auszurichten. Weiterhin ist es bevorzugt vorgesehen, dass eine Linse 20 zwischen dem Spiegelelement 30 und dem Metall-Keramik-Substrat 1 angeordnet ist. Insbesondere erstreckt sich die Linse 20 entlang einer in der wesentlich senkrecht zur Auftreffrichtung des Laserlichts 10 verlaufenden Ebene im Wesentlichen über eine Länge, die der Länge und/oder Breite des Metall-Keramik-Substrates 1, als Großkarte, entspricht. Mit anderen Worten: das über das Metall-Keramik-Substrat 1 fahrende Laserlicht 10 durchläuft unabhängig vom Bearbeitungsbereich stets dieselbe Linse 20.

Es hat sich dabei als besonders vorteilhaft herausgestellt, eine Linse 20 zu verwenden, deren Brennweite größer ist als 300 mm, bevorzugt größer als 350 mm und besonders bevorzugt größer als 420 mm. Das Anordnen der Linse 20 in einem Abstand A von Metall-Keramik-Substrat 1, der im Wesentlichen der Brennweite der Linse 20 entspricht, ermöglicht es dann Sollbruchstellen bzw. Sollbruchlinien 7 zu erzeugen, die gegenüber einer senkrechts zur Haupterstreckungsebene HSE des Metall-Keramik-Substrats 1 verlaufenen Lotrichtung vergleichsweise gering geneigt sind. Andernfalls wäre mit einem Neigungswinkel W1, der im Wesentlichen V-förmige bzw. kerben-förmigen Sollbruchlinien 7 zu rechnen. Dies gilt insbesondere für Sollbruchlinien 7, die am Rand des Metall-Keramik-Substrats 1 entstehen. Eine solche Schräglage wird dabei insbesondere dadurch bedingt, dass das Laserlicht 10 bzw. die Laserstrahlen nicht senkrecht gleichmäßig über die gesamte Ausdehnung des Metall-Keramik-Substrats 1 auf das Metall-Keramik-Substrat 1 auftreffen können. Durch die Verwendung der Brennweite größer als 300 mm, wird jedoch diese Schrägstellung, insbesondere in den Randbereichen des Metall-Keramik-Substrats 1 derart reduziert, dass ein Neigungswinkel W1 gemessen bzw. bezogen auf die Lotrichtung des Metall-Keramik-Substrats 1 kleiner ist als 12°, besonders bevorzugt kleiner als 10°. Insbesondere ist festzustellen, dass eine Abweichung des Neigungswinkels W1 im Vergleich zu der Ausrichtung der Sollbruchlinie 7 in der Mitte des Metall-Keramik-Substrats 1 nicht größer wird als 12°. Dadurch ist es in vorteilhafter Weise möglich, Sollbruchlinien 7 zu erstellen, deren Bruchverhalten im Wesentlichen über das gesamte Metall-Keramik-Substrat 1 homogen verteilt ist.

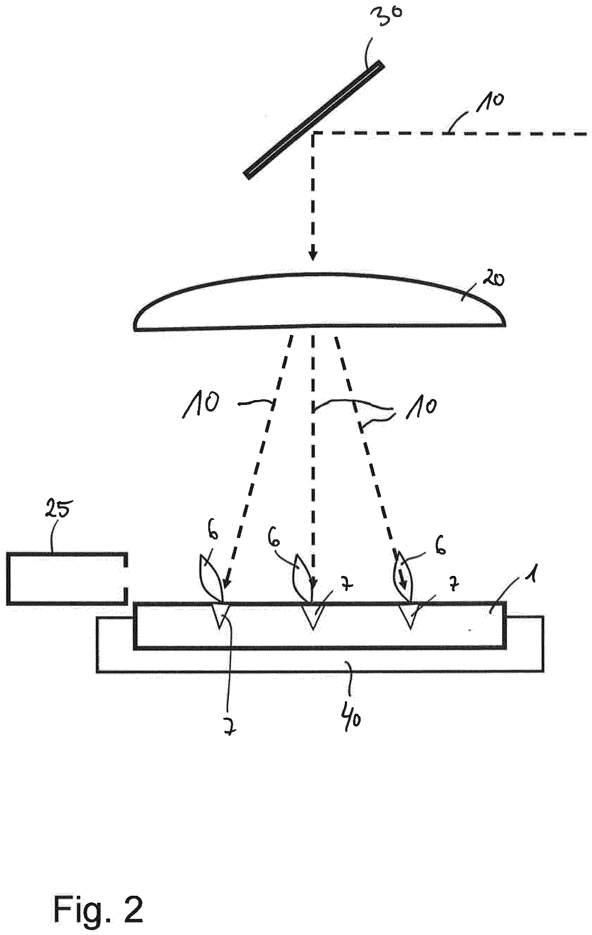

Ergänzend und/oder alternativ ist es vorstellbar, dass der Träger 40 abhängig vom aktuell zu bearbeitenden Bearbeitungsbereich verschwenkt wird, insbesondere dann, wenn der Laserstrahl 10 Randbereiche des Metall-Keramik-Substrats 1 behandelt. Beispielsweise ist es vorstellbar, dass der Träger 40 das Metall-Keramik-Substrat 1 derart verschwenkt wird, dass der Laserstrahl 10 für jeden aktuellen Bearbeitungsbereich im Wesentlichen senkrecht auf das Metall-Keramik-Substrat 1 auftrifft. Dadurch lässt sich ein entsprechendes senkrechtes Auftreffen auf das Metall-Keramik-Substrat 1 realisieren. Auch ist es vorstellbar, dass die Linse 20 als F-Theta Linse ausgebildet ist bzw. eine F-Theta Linse umfasst, die es gestattet, durch die individuelle Anpassung der Linse 20 ein senkrechtes Auftreffen auf das Metall-Keramik-Substrat 1 zu gewährleisten, auch für Großkarten, die eine vergleichsweise große Fläche aufweisen. In **Figur 2** ist ein Verfahren zum Bearbeiten von Metall-Keramik-Substraten 1 gemäß einer zweiten beispielhaften Ausführungsform der vorliegenden Erfindung dargestellt. Dabei wird die Ausführungsform der Figur 1 in der Ausführungsform der Figur 2 dahingehend ergänzt, dass zusätzlich eine Absaugvorrichtung 25 vorgesehen ist. Die Absaugvorrichtung 25 ist dabei seitlich versetzt zum Metall-Keramik-Substrat 1 bzw. zum Träger 40 angeordnet. Die Absaugvorrichtung 25 weist eine Öffnung auf, durch die ein Gas angesaugt wird. Insbesondere dient die Absaugvorrichtung 25 dazu, dass sublimierte Teilchen während des Bearbeitungsprozesses von der Oberfläche oder der Oberseite des Metall-Keramik-Substrats 1 abgesaugt werden. Diese sublimierten Teilchen aus Keramik sind Resultat einer Plasmabildung bzw. einer Plasmaflamme 6, die im Rahmen der Bearbeitung des Metall-Keramik-Substrats 1 mittels Ultrakurzpulslaserslicht entsteht. Insbesondere ist es vorgesehen, dass die Öffnung der Absaugvorrichtung 25 in Bezug auf die Lotrichtung des Metall-Keramik-Substrats 1 im Wesentlichen auf einer Höhe des Metall-Keramik-Substrats 1 angeordnet ist. Insbesondere ist die Öffnung der Absaugvorrichtung 25 derart ausgerichtet, dass eine Absaugrichtung 25 im Wesentlichen parallel zur Haupterstreckungsebene HSE des Metall-Keramik-Substrats 1 verläuft. In Folge des Absaugeffekts, werden die Plasmaflammen 6 zur Absaugvorrichtung 25 hingeneigt. Infolgedessen ändern sich für die den jeweiligen Bearbeitungsbereich die Ausrichtungen der Plasmaflammen 6, insbesondere deswegen, weil abhängig von einer Distanz des aktuellen Bearbeitungsbereichs zur Absaugvorrichtung 25 die Plasmaflammen 6 unterschiedliche Neigungswinkel bzw. Winkel W1 aufweisen. Infolgedessen durchsetzen die Lichtstrahlen 10 während der Bearbeitung des Metall-Keramik-Substrats 1 abhängig vom jeweils aktuellen Bearbeitungsbereich der Sollbruchlinie 7 unterschiedlich große Anteile der Plasmaflammen 6. Dadurch ändern sich die Fokuslage und die Position für die auftreffenden Laserstrahlen bzw. das auftreffende Laserlicht 10. Resultat ist, dass sich die Sollbruchlinien 7 über das gesamte Metall-Keramik-Substrat 1 gesehen voneinander unterscheiden können.

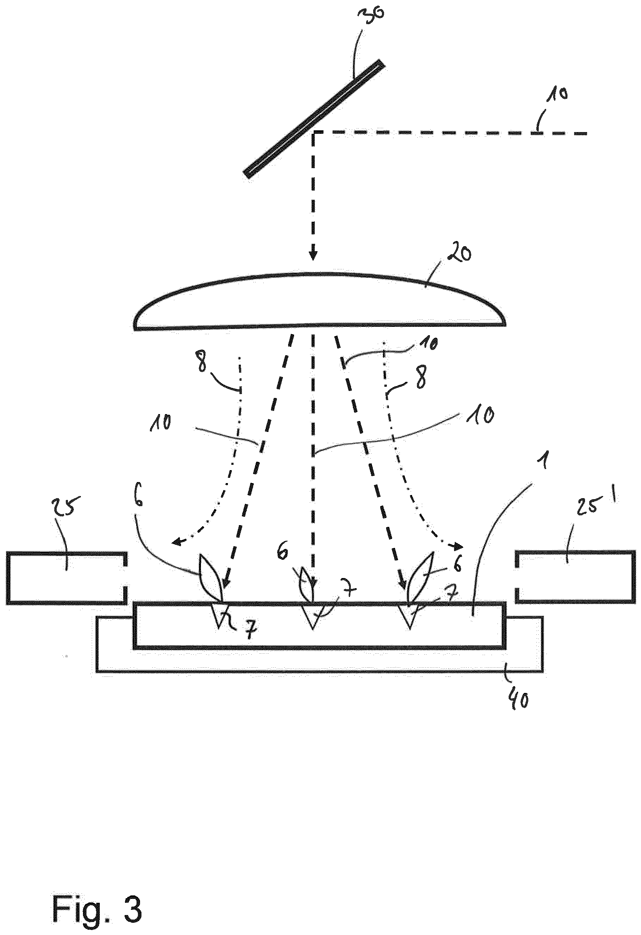

In **Figur 3** ist ein Verfahren zur Bearbeitung eines Metall-Keramik-Substrats 1 gemäß einer dritten, bevorzugten Ausführungsform der vorliegenden Erfindung dargestellt. Dabei ist es insbesondere vorgesehen, dass eine Absaugvorrichtung 25 und eine weitere Absaug- und/oder Blasvorrichtung 25' vorgesehen sind, wobei die weitere Absaug- bzw. Blasvorrichtung 25' gegenüberliegend zu der Absaugvorrichtung 25 angeordnet ist. Durch das Anordnen der Absaugvorrichtung 25 und der weiteren Absaug- bzw. Blasvorrichtung 25' auf gegenüberliegenden Seiten bezogen auf eine parallel zur Haupterstreckungsebene HSE des Metall-Keramik-Substrats 1, z. B. verlaufende Richtung, ist es in vorteilhafter Weise möglich, von gegenüberliegenden Enden des Metall-Keramik-Substrats 1 ein Absaugen vorzunehmen, insbesondere derart, dass für die Randbereiche die Neigung bzw. der Winkel W der Plasmaflammen 6 einander entsprechen. Dadurch lässt sich insbesondere die Neigung der Plasmaflammen 6 im Randbereich bzw. auf beiden Randbereichsseiten des Metall-Keramik-Substrats 1 möglichst gleich einstellen. Hierzu ist es insbesondere vorgesehen, dass die Absaugvorrichtung 25 und die weitere Absaug- bzw. Blasvorrichtung 25' im gleichen Maße absaugen, d. h. das gleiche Saugverhalten aufweisen. Vorzugsweise ist es weiterhin vorgesehen, mittels eines Luftstroms bzw. eines Gasstroms 8 die Neigung einer Plasmaflamme 6 zu beeinflussen, z. B. mit einer Absaugvorrichtung 25 auf der einen und einer Blasvorrichtung 25' auf der anderen Seite.

Vorzugsweise ist der Gasstrom 8 aber von der Linse 20 kommend auf das Metall-Keramik-Substrat 1 gerichtet. Insbesondere ist der Gasstrom 8 auf eine Mitte des Metall-Keramik-Substrats 1, insbesondere die Großkarte, gerichtet und weicht nach dem Auftreffen auf das Metall-Keramik-Substrat 1 seitlich in Richtung der Absaugvorrichtung 25 bzw. der weiteren Absaugvorrichtung 25' aus. Beispielsweise handelt es sich bei dem Gasstrom 8 um einen Luftstrom oder um einen Strom aus einem Prozessgas, das beispielsweise für eine zusätzliche Kühlung des Metall-Keramik-Substrats 1 sorgt.

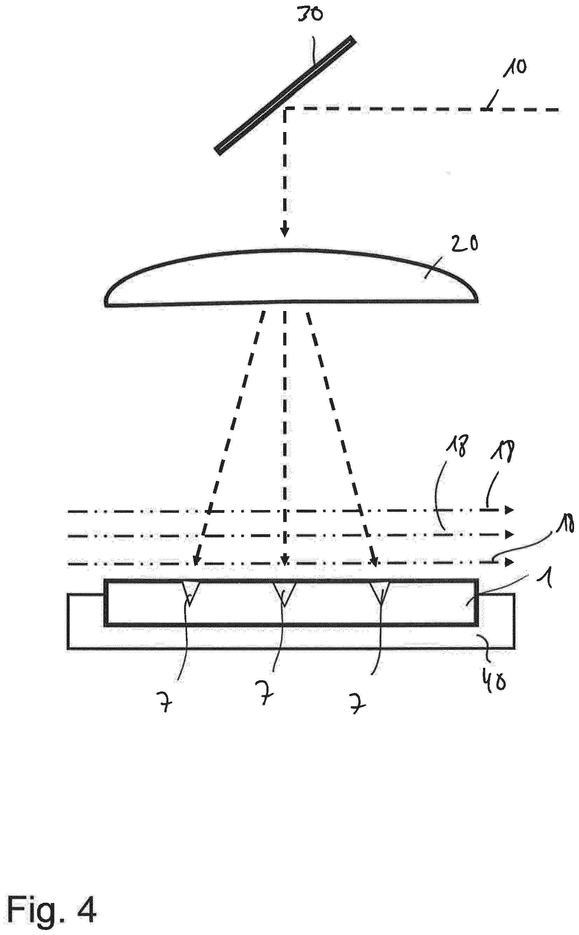

In der **Figur 4** ist schematisch ein Verfahren zur Bearbeitung eines Metall-Keramik-Substrats 1 gemäß einer vierten bevorzugen Ausführungsform der vorliegenden Erfindung dargestellt. Dabei unterscheidet sich das Bearbeiten aus dem Ausführungsbeispiel der Figur 4 von demjenigen aus der Figur 1 dahingehend, dass zusätzlich oder alternativ Feldlinien 18 bereitgestellt werden, die dafür sorgen, dass die Teilchen der Plasmaflamme 6 abtransportiert werden. Insbesondere sind die Feldlinien 18 derart ausgerichtet, dass sie dafür sorgen, dass die Teilchen entlang einer Flugrichtung, die parallel zur Haupterstreckungsebene HSE verlaufen, abtransportiert werden. Beispielsweise werden derartige Feldlinien 18 mittels eines elektrischen und/oder magnetischen Feldes, beispielsweise veranlasst durch eine oder mehrere Spulen oder einen oder mehrere Kondensatorplatten, realisiert. Dadurch lassen sich die ionisierten Teilchen der Plasmaflammen 6 in vorteilhafter Weise abtransportieren, sodass sich die Bildung der Plasmaflamme 6 oberhalb der geplanten Sollbruchlinie 7 bzw. im Bearbeitungsbereich reduzieren bzw. sogar unterdrücken lässt.

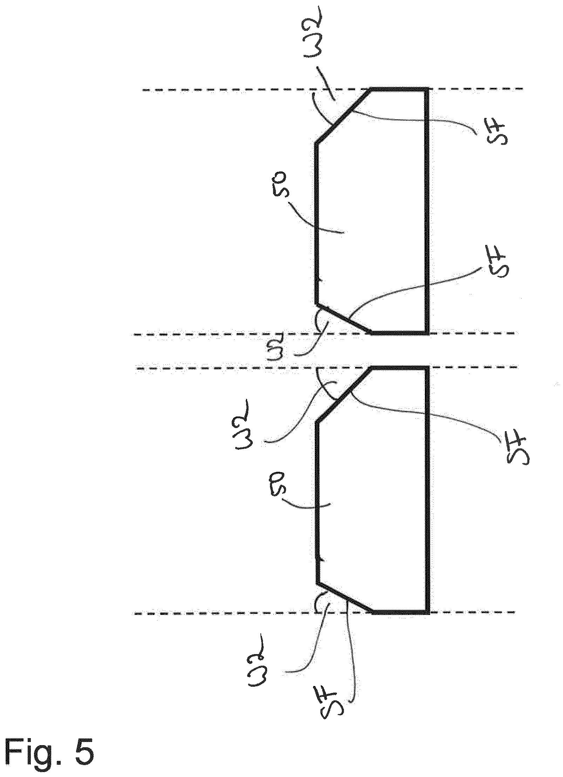

In **Figur 5** sind in einer schematischen Darstellung Metall-Keramik-Substrate 1 dargestellt, die durch ein Zerbrechen entlang einer Sollbruchlinie 7 entstehen, wenn die Sollbruchlinie 7 mit dem erfindungsgemäßen Verfahren hergestellt wird. Dabei ist es insbesondere vorgesehen, dass im Bereich der hergestellten Sollbruchlinie 7 diese begrenzt wird durch gegenüber der Haupterstreckungsebene HSE geneigten Seitenflächen SF, die auch noch im zerteilten Metall-Keramik-Substrat 1 zu erkennen sind. Der Einfachheit halber ist in Figur 5 ausschließlich das Keramikelement 50 dargestellt, wobei in der Regel an der Oberseite eine hier nicht dargestellte Metallschicht angebunden ist. Vorzugsweise handelt es sich bei den Seitenflächen SF um die Abschnitte im Keramikelement 50, die oberhalb einer Bruchkante, die nach dem Brechen entlang der Sollbruchlinie 7 im Wesentlichen zur Haupterstreckungsebene HSE senkrecht ausgerichtet entsteht, angeordnet sind. Gegenüber einer Lotrichtung, die senkrecht zur Haupterstreckungsebene HSE verläuft, weisen dabei die Seitenflächen SF jeweils unterschiedliche eine Seitenflächenneigungen W2 auf.

Insbesondere ist es vorgesehen, dass sich die Seitenflächenneigungen W2 an in einer parallel zur Haupterstreckungsebene HSE verlaufenden Richtung einander gegenüberliegenden Seitenflächen SF voneinander unterscheiden. Beispielsweise nimmt eine Differenz zwischen den absoluten Werten der Seitenflächen SF der gegenüberliegenden Seiten einen von Null verschiedenen Wert an, vorzugsweise einen Wert zwischen 1° und 10°, bevorzugt zwischen 2° und 8° und besonders bevorzugt zwischen 3° und 6°. Vorzugsweise nimmt ein Mittelwert der Differenzen einen Wert unterhalb von 4°, bevorzugt unterhalb von 3° und besonders bevorzugt unterhalb von 2° an. Dabei wird über alle vereinzelten Metall-Keramik-Substrate gemittelt, die aus einer gemeinsamen Großkarte herausgebrochen werden sollen.

### Bezugszeichenliste:

- 1: Metall-Keramik-Substrat
- 6: Plasmaflamme
- 7: Sollbruchlinie
- 8: Gasstrom
- 10: Laserlicht
- 18: Feldlinien
- 20: Linse
- 25: Absaugvorrichtung
- 25': weitere Absaugvorrichtung/Blasvorrichtung
- 30: Spiegelelement
- 40: Träger
- 50: Keramikelement
- SF: Seitenfläche
- HSE: Haupterstreckungsebene
- A: Abstand
- W1: Neigungswinkel
- W2: Seitenflächenneigung
- 40: Träger
- 50: Keramikelement
- SF: Seitenfläche
- HSE: Haupterstreckungsebene
- A: Abstand
- W1: Neigungswinkel
- W2: Seitenflächenneigung

## Patentansprüche

1. Verfahren zum Bearbeiten eines Metall-Keramik-Substrats (1), das als Großkarte vorliegt, umfassend:
- Bereitstellen eines Metall-Keramik-Substrats (1),
- Ausbilden einer Sollbruchlinie (7) und bevorzugt einer Trennlinie zum Vereinzeln des Metall-Keramik-Substrats (1) mittels Laserlichts (10) eines Ultrakurzpuls (UKP)-Lasers,
wobei das Metall-Keramik-Substrat (1) während der Ausbildung der Sollbruchlinie (7) ortsfest angeordnet ist und wobei zur Ausbildung der Sollbruchlinie (7) das Laserlicht (10) über das Metall-Keramik-Substrat (1) bewegt und eine Kerbe realisiert wird, die gegenüber der Lotrichtung geneigt ist **dadurch gekennzeichnet, dass** alle Neigungswinkel in einer Großkarte kleiner als 12° sind und ein über alle Sollbruchvertiefungen der Großkarte gemittelter Neigungswinkel einen Wert zwischen 2° und 11° annimmt.

2. Verfahren gemäß Anspruch 1, wobei das Laserlicht (10) über mindestens ein schwenkbares Spiegelelement (30) auf das Metall-Keramik-Substrat (1) gelenkt wird und insbesondere mittels des mindestens einen schwenkbaren Spiegelelements (30) über das Metall-Keramik-Substrat (1) bewegt wird.

3. Verfahren gemäß einem der vorhergehenden Ansprüche, wobei zwischen dem Spiegelelement (30) und dem Metall-Keramik-Substrat (1) und/oder der Laserquelle und dem Spiegelelement (30) eine Linse (20) angeordnet ist, wobei eine Brennweite der Linse (20) einen Wert von mehr als 300 mm, bevorzugt mehr als 400 mm und besonders bevorzugt zwischen 420 mm und 480 mm aufweist.

4. Verfahren gemäß einem der vorhergehenden Ansprüche, wobei eine Absaugvorrichtung (25), die während der Behandlung entstehenden Teilchen absaugt, vorgesehen ist.

5. Verfahren gemäß Anspruch 4, wobei die Absaugvorrichtung (25) von einem Gasstrom (8) unterstützt wird.

6. Verfahren gemäß einem der vorhergehenden Ansprüche, wobei mittels eines elektrischen und/oder magnetischen Feldes während der Bearbeitung entstehende Teilchen aus einem Bearbeitungsbereich wegbewegt werden.

7. Verfahren gemäß einem der vorhergehenden Ansprüche, wobei das Metall-Keramik-Substrat (1) während der Herstellung der Sollbruchlinie (7) geneigt wird, insbesondere in Abhängigkeit eines aktuellen Bearbeitungsbereichs auf dem Metall-Keramik-Substrat (1).

8. Metall-Keramik-Substrat (1), das als Großkarte vorliegt, hergestellt mit einem Verfahren, umfassend:
- Bereitstellen eines Metall-Keramik-Substrats (1),
- Ausbilden einer Sollbruchlinie (7) und bevorzugt einer Trennlinie zum Vereinzeln des Metall-Keramik-Substrats (1) mittels Laserlichts (10) eines Ultrakurzpuls (UKP)-Lasers,
wobei das Metall-Keramik-Substrat (1) während der Ausbildung der Sollbruchlinie (7) und/oder der Trennlinie ortsfest angeordnet ist und
wobei zur Ausbildung der Sollbruchlinie (7) das Laserlicht (10) über das Metall-Keramik-Substrat (1) bewegt und eine Kerbe realisiert wird, die gegenüber der Lotrichtung geneigt ist, **dadurch gekennzeichnet, dass** alle Neigungswinkel in einer Großkarte kleiner als 12° sind und ein über alle Sollbruchvertiefungen der Großkarte gemittelter Neigungswinkel einen Wert zwischen 2° und 11° annimmt.

9. Metall-Keramik-Substrat (1) gemäß Anspruch 8, wobei ein Neigungswinkel (W1) der v-förmigen Kerbe zu einer senkrecht zur Haupterstreckungsebene (HSE) verlaufenden Richtung einen Wert annimmt, der kleiner als 12° ist, vorzugsweise für alle Sollbruchlinie einer Großkarte.

10. Metall-Keramik-Substrat (1) gemäß einem der Ansprüche 8 bis 9, wobei das zu vereinzelnde Metall-Keramik-Substrat (1) im Bereich der Sollbruchlinie (7) durch gegenüber der Haupterstreckungsebene (HSE) geneigten Seitenflächen (SF) begrenzt wird und an einander gegenüberliegenden Seiten die den verschiedenen Sollbruchlinien (7) zugeordneten Seitenflächen (SF) unterschiedliche Seitenflächenneigungen (W2) aufweisen.

11. Metall-Keramik-Substrat (1) gemäß Anspruch 10, wobei eine Differenz der Seitenflächenneigungen (W2) von gegenüberliegenden Seitenflächen (SF) einen von Null verschiedenen Wert annimmt, vorzugsweise einen Wert zwischen 1° und 10°, bevorzugt zwischen 2° und 8° und besonders bevorzugt zwischen 3° und 6°.

12. Metall-Keramik-Substrat gemäß Anspruch 11, wobei ein Mittelwert der Differenzen einen Wert unterhalb von 4°, bevorzugt unterhalb von 3° und besonders bevorzugt unterhalb von 2° annimmt.

## Claims

1. A method of processing a metal-ceramic substrate (1) which is provided as a master card, comprising:
- providing a metal-ceramic substrate (1),
- forming a predetermined breaking point (7) and more preferably a separation line for separating the metal-ceramic substrate (1) by means of laser light (10) of an ultrashort pulse (UKP) laser,
wherein the metal-ceramic substrate (1) is arranged stationary during the formation of the predetermined breaking point (7), and
wherein, for forming the predetermined breaking point (7), the laser light (10) is moved across the metal-ceramic substrate (1) and a groove is produced which is inclined with respect to the direction of the gravity direction, **characterized in that** all the angles of inclination in a master card are less than 12° and an angle of inclination averaged over all the predetermined breaking recesses of the master card has a value between 2° and 11°.

2. The method according to claim 1, wherein the laser light (10) is directed onto the metal-ceramic substrate (1) via at least one pivotable mirror element (30) and is moved across the metal-ceramic substrate (1), in particular by means of the at least one pivotable mirror element (30).

3. The method according to any one of the preceding claims, wherein a lens (20) is arranged between the mirror element (30) and the metal-ceramic substrate (1) and/or the laser source and the mirror element (30), wherein a focal length of the lens (20) has a value of more than 300 mm, more preferably more than 400 mm, and most preferably between 420 mm and 480 mm.

4. The method according to any one of the preceding claims, wherein a suction device (25) which suctions off particles produced during the treatment is intended.

5. The method according to claim 4, wherein the suction device (25) is supported by a gaseous stream (8).

6. The method according to any one of the preceding claims, wherein particles produced during processing are moved away from a processing area by means of an electric and/or a magnetic field.

7. The method according to any one of the preceding claims, wherein the metal-ceramics substrate (1) is inclined during production of the predetermined breaking point (7), in particular as a function of a current processing area on the metal-ceramic substrate (1).

8. The metal-ceramic substrate (1), being provided as a master card, produced by a method comprising:
- providing a metal-ceramic substrate (1),
- forming a predetermined breaking point (7) and preferably a separation line for separating the metal-ceramic substrate (1) by means of laser light (10) of an ultrashort pulse (UKP) laser,
wherein the metal-ceramic substrate (1) is arranged stationary during the formation of the predetermined breaking point (7) and/or the separation line, and
wherein, for forming the predetermined breaking point (7), the laser light (10) is moved across the metal-ceramic substrate (1) and a groove is realized which is inclined with respect to the gravity direction, **characterized in that** all angles of inclination in a master card are smaller than 12° and an angle of inclination averaged over all predetermined breaking recesses of the master card has a value between 2° and 11°.

9. The metal-ceramic substrate (1) according to claim 8, wherein an angle of inclination (W1) of the v-shaped groove to a direction perpendicular to the main extension plane (HSE) has a value smaller than 12°, preferably for all predetermined breaking points of a master card.

10. The metal-ceramic substrate (1) according to any one of claims 8 to 9, wherein the metal-ceramic substrate (1), to be singulated, is limited in the region of the predetermined breaking point (7) by side surfaces (SF) inclined with respect to the main extension plane (HSE), and on opposite sides the side surfaces (SF) associated with the various predetermined breaking points (7) have different side surface inclinations (W2).

11. The metal-ceramic substrate (1) according to claim 10, wherein a difference of side surface inclinations (W2) of opposite side surfaces (SF) has a value different from zero, preferably a value between 1° and 10°, more preferably between 2° and 8° and most preferably between 3° and 6°.

12. The metal-ceram ic substrate according to claim 11, wherein an average value of the differences has a value below 4°, more preferably below 3° and most preferably below 2°.

## Revendications

1. Procédé d'usinage d'un substrat métal-céramique (1) se présentant sous forme de grande carte, consistant à :
- fournir un substrat métal-céramique (1),
- créer une ligne destinée à la rupture (7) et de préférence une ligne de séparation pour individualiser le substrat métal-céramique (1) au moyen d'une lumière laser (10) d'un laser à impulsions ultracourtes (UKP),
le substrat métal-céramique (1) étant disposé de manière stationnaire pendant la création de la ligne destinée à la rupture (7), et
la lumière laser (10) étant déplacée sur le substrat métal-céramique (1) pour créer la ligne destinée à la rupture (7) en formant une encoche inclinée par rapport à la verticale,
**caractérisé en ce que** tous les angles d'inclinaison dans une grande carte sont inférieurs à 12°, et un angle d'inclinaison moyenné sur tous les renfoncements destinés à la rupture de la grande carte prend une valeur comprise entre 2° et 11°.

2. Procédé selon la revendication 1,
dans lequel la lumière laser (10) est dirigée sur le substrat métal-céramique (1) par l'intermédiaire d'au moins un élément de miroir pivotant (30) et est en particulier déplacée sur le substrat métal-céramique (1) au moyen dudit au moins un élément de miroir pivotant (30).

3. Procédé selon l'une des revendications précédentes,
dans lequel une lentille (20) est disposée entre l'élément de miroir (30) et le substrat métal-céramique (1) et/ou entre la source laser et l'élément de miroir (30), une distance focale de la lentille (20) présentant une valeur supérieure à 300 mm, de préférence supérieure à 400 mm et de manière particulièrement préférée comprise entre 420 mm et 480 mm.

4. Procédé selon l'une des revendications précédentes,
dans lequel il est prévu un dispositif d'aspiration (25) qui aspire les particules produites pendant l'usinage.

5. Procédé selon la revendication 4,
dans lequel le dispositif d'aspiration (25) est assisté par un flux de gaz (8).

6. Procédé selon l'une des revendications précédentes,
dans lequel les particules produites pendant l'usinage sont déplacées hors d'une zone d'usinage au moyen d'un champ électrique et/ou magnétique.

7. Procédé selon l'une des revendications précédentes,
dans lequel le substrat métal-céramique (1) est incliné pendant la création de la ligne destinée à la rupture (7), en particulier en fonction d'une zone d'usinage actuelle sur le substrat métal-céramique (1).

8. Substrat métal-céramique (1) se présentant sous forme de grande carte, fabriqué par un procédé consistant à :
- fournir un substrat métal-céramique (1),
- créer une ligne destinée à la rupture (7) et de préférence une ligne de séparation pour individualiser le substrat métal-céramique (1) au moyen d'une lumière laser (10) d'un laser à impulsions ultracourtes (UKP),
le substrat métal-céramique (1) étant disposé de manière stationnaire pendant la création de la ligne destinée à la rupture (7) et/ou de la ligne de séparation, et la lumière laser (10) étant déplacée sur le substrat métal-céramique (1) pour créer la ligne destinée à la rupture (7) en formant une encoche inclinée par rapport à la verticale,
**caractérisé en ce que** tous les angles d'inclinaison dans une grande carte sont inférieurs à 12°, et un angle d'inclinaison moyenné sur tous les renfoncements destinés à la rupture de la grande carte prend une valeur comprise entre 2° et 11°.

9. Substrat métal-céramique (1) selon la revendication 8,
dans lequel un angle d'inclinaison (W1) de l'encoche en forme de V par rapport à une direction perpendiculaire au plan d'extension principale (HSE) prend une valeur inférieure à 12°, de préférence pour toutes les lignes destinées à la rupture d'une grande carte.

10. Substrat métal-céramique (1) selon l'une des revendications 8 à 9,
dans lequel le substrat métal-céramique (1) à individualiser est délimité dans la zone de la ligne destinée à la rupture (7) par des surfaces latérales (SF) inclinées par rapport au plan d'extension principale (HSE), et les surfaces latérales (SF) associées aux différentes lignes destinées à la rupture (7) présentent des inclinaisons de surface latérale (W2) différentes sur les côtés opposés les uns aux autres.

11. Substrat métal-céramique (1) selon la revendication 10,
dans lequel une différence des inclinaisons de surface latérale (W2) des surfaces latérales opposées (SF) prend une valeur non nulle, de préférence une valeur comprise entre 1° et 10°, de préférence entre 2° et 8° et de manière particulièrement préférée entre 3° et 6°.

12. Substrat métal-céramique selon la revendication 11,
dans lequel une valeur moyenne des différences prend une valeur inférieure à 4°, de préférence inférieure à 3° et de manière particulièrement préférée inférieure à 2°.
